# EUROPEAN PATENT APPLICATION

(11) **EP 3 841 929 A1**
(43) Date of publication of application: **30.06.2021**
(21) Application number: 19219190.6
(22) Date of filing: 23.12.2019
(51) Int. Cl.: A47J 27/21, A47J 31/54, B67D 1/00, B67D 1/08

(54) **APPARATUS FOR PROVIDING HOT WATER**

(71) Applicant: Brita GmbH, 65232 Taunusstein (DE)
(72) Inventor: DUCHARDT, Thomas, 63069 Offenbach (DE); MACHUI, Oliver, 61352 Bad Homburg (DE); MARQUISS, Dan, Crowthorne, Wokingham, Berkshire RG45 6QP (GB)

(57) **Abstract**

Apparatus (1) for providing hot water (12), wherein the apparatus (1) comprises:
• a water storage container (10);
• a heating element (14) for heating water (12) positioned within the water storage container (10); and
• a tap (24), wherein the tap (24) is positioned above the water storage container (10), wherein the tap (24) is fluidically connected to the water storage container (10) via a pipeline (26), wherein the pipeline (26) comprises a pump (30),
characterized in that the pipeline (26) is at least partly formed as a riser (28) within or through the water storage container (10).

## Description

The invention relates to an apparatus for providing hot water according to the preamble of claim 1.

Apparatuses for providing hot beverages appear in many embodiments and usually come with a plurality of features. These apparatuses share a common problem. A heating element heats the water for making the hot beverage. Usually, the heating element is spaced apart from the tap providing the hot water to a user. In many cases, the heating element is positioned in a water storage container for heating a larger amount of water.

These apparatuses comprise a pipeline fluidically connecting the water storage container with the tap. When the apparatus is inactive, i.e. no user receives hot water, there is unused water in the pipeline remaining after the last usage of the apparatus. Over time, the unused water cools down to room temperature. The next user using the apparatus for receiving hot water will receive the unused and cooled water. The hot water from the water storage container will be received some time after the unused water has cooled down. Thus, the water taken from the tap comprises water from the pipeline having room temperature mixed with hot water from the hot water storage. Therefore, the mixed water does not have the desired high temperature.

There are some apparatuses reducing or preventing the mixing of hot and cold water. The apparatuses disclosed in EP 2 168 466 A1, WO 2016/087996 A1 and WO 2007/046702 A2 comprise a drain for draining the water from the pipeline wherein the drain is located between the heating element or the water storage container and the tap. Thus, no water remains within the pipeline that can cool down. The apparatuses provide only hot water coming from a water storage tank or a heating section within the apparatus. EP 2 502 531 A1 discloses a three-way valve. The first way is connected to a water intake for the boiler, whereas the second way is connected to an outside air inlet, and the third way is connected to a water outlet towards the dispenser where the unused water is drained through the tap.

Alternatively, the water from the pipeline may be recycled. Such an apparatus is disclosed in EP 2 787 868 B1, which comprises a drain that is fluidically connected to a water storage container. For another reason, which is to prevent damage from overpressure within the pipeline, DE 60 2004 008 637 T2 discloses an apparatus having a return control valve, wherein a third connection of the return control valve returns water to a water storage container if it is pressed out of a boiler due to overpressure.

With all known hot water dispensers, residual water remaining in the section between the boiler and the tap must be removed.

The object of the invention is to provide an apparatus, which, in case of need, provides hot water as quickly as possible without residual water in the pipeline being removed beforehand.

The problem is solved by the independent claim.

The invention relates to an apparatus for providing hot water, wherein the apparatus comprises a water storage container, a heating element for heating water positioned within the water storage container and a tap. The tap is positioned above the water storage container. The tap is fluidically connected to the water storage container via a pipeline. The pipeline comprises a pump. The pipeline is at least partly formed as a riser within or through the water storage container.

The hot water may be used for hot beverages, especially tea, coffee or hot chocolate.

The water storage container preferably is an open water storage container. "Open" means that the water storage container is fluidically connected to the atmosphere, i.e. it has a vent or similar and is not closed. Thus, the pressure within the water storage container is atmospheric pressure.

Preferably, the water storage container is thermally isolated. The heating element heats the water until a predetermined temperature is reached. Then, the heating element can be deactivated to save energy. The water storage container may be thermally isolated to prevent the water from cooling down or at least to reduce the cooling rate.

Preferably, the water storage container may have a water containing capacity of 1 I to 50 I. Preferably, the water storage may have a water containing capacity of 2.5 I to 20 I.

The at least one heating element may be an electric heating element. For example, the heating element may be formed as a heating resistance or a heating coil.

The tap is positioned above the water storage container. Within the framework of the invention, "above" means being spaced apart in vertical direction. The distance of the tap to the water storage container in horizontal direction is arbitrary and only restricted by boundary conditions like the volume of the apparatus, i.e. the space it occupies, length of pipelines etc.

The pump within the pipeline is configured to pump the water from the water storage container against gravity towards the tap, which is above the water storage container.

The pipeline being at least partly formed as a riser within or through the water storage container advantageously has the effect that the water within the riser or at least within the part of the riser being surrounded by the water is kept warm by the heated water within the water storage container. The heating of the riser inside the water storage container has the additional advantage that parts of the pipeline adjacent to the riser are heated as well. Hence, a large amount of residual water is kept at high temperature.

If the apparatus is not used and water remains unused within the pipeline, the water therein does not cool down to room temperature over time. A user, who wants to receive hot water for preparing a hot beverage, can now receive the water from the riser and then the heated water from the water storage container. Thus, the temperature of the received water is higher in comparison with the temperature received from an apparatus without having a riser within or through the water storage container.

In an embodiment, the pipeline further comprises a drain valve for draining the water from the pipeline or parts thereof, wherein the drain valve comprises a tapping position and a draining position, wherein the water storage container and the tap are fluidically connected to each other via the riser if the drain valve is in the tapping position.

Preferably, the drain valve is a three-two-way-valve.

The nomenclature of valves is as follows: The first number gives the number of ports the valve has. The second number gives the number of positions the valve may take. Thus, a three-two-way valve has three ports and can take two positions.

The first and second ports of the drain valve are connected to the pipeline, wherein the drain valve is positioned within the pipeline. Preferably, the drain valve is positioned between the riser and the tap. In other words, water flowing from the water storage container towards the tap has to flow through the pipeline and through the drain valve passing the first and second ports. The first port may be fluidically connected to the pipeline and subsequently to the water storage container. The second port may be connected to the pipeline and subsequently to the tap.

The drain valve may take a tapping position and a draining position. In the tapping position, the drain valve opens the pipeline. Thus, water may flow from the water storage container through the riser towards the tap.

In an embodiment, the tap and the water storage container are connected fluidically to each other via the pipeline, if the drain valve is in the draining position.

Thus, in the draining position, the tap functions as an air inlet. With the tap being an air inlet, the water between the drain valve and the tap may flow through the return line towards the water storage container or towards a drain. This removes the unused water from the parts of the pipeline, which are not kept warm by the water storage container and the heated water contained within.

In another embodiment, the tap is additionally fluidically connected to a second water source and the pipeline comprises a non-return valve.

The fluidic connection between the second water source and the tap may for example be realized by a T-piece. The second water source may for example be a cold water source, i.e. a cooling unit providing cooled water, a fridge providing cooled water or a common water supply providing water at room temperature.

The non-return valve prevents water from the second water supply, especially cooled water, from flowing down the riser towards or into the water storage container. Thus, the non-return valve prevents the water storage container from flooding.

The fluidic connection between the second water source and the tap advantageously makes it possible for the user of the apparatus to have not only hot water of a specific preset temperature but to have mixed water having any temperature desired. Of course, the upper limit of that temperature is the temperature of the heated water alone and the lower limit of that temperature is the temperature of the water coming from the second water source. The resulting temperature depends on the mixing ratio of the heated water and the water from the second water supply.

In another embodiment, the pipeline comprises a pressure relief valve between the drain valve and the non-return valve. Preferably, the pressure relief valve is positioned within the riser or after the riser. If the pressure relief valve is positioned within the riser, it may release water steam or water into the water storage container or into the atmosphere. The pressure relief valve may be positioned above the water level or below the water level within the water storage container.

When having a non-return valve and a drain valve and the drain valve being in the draining position, the space between the non-return valve and the drain valve, including the space within the riser, is closed. The pressure relief valve is used for releasing pressure from the pipeline if the water within the riser is heated so much that the pressure within the pipeline rises above a safety limit, wherein the safety limit indicates a safe operation of the apparatus. Thus, the pressure relief valve prevents the riser, the drain valve and the non-return valve from taking damage due to overpressure.

In another embodiment, the pump is a booster pump. Preferably, the pump is positioned beneath the water storage container. In this embodiment, the booster pump is used for boosting the pressure of the water column at its inlet to press the water against gravity towards the tap through its outlet.

Within the framework of the invention, "beneath" means being spaced apart in vertical direction. "Beneath" is the opposite to "above". The distance of the pump to the water storage container in horizontal direction may be arbitrary and is only restricted by boundary conditions like the volume of the apparatus, i.e. the space it occupies, length of pipelines etc.

In an embodiment, the pipeline is fluidically connected to the water storage container at a bottom section of the water storage container.

Advantageously, the pipeline being connected to the bottom section of the water storage container reduces the way for the pipeline to reconnect to the water storage container at its bottom, which is necessary for the riser to go through the water storage container. In this case, the riser has a maximum length within the water storage container and thus has the most possible contact with the heated water. That contact enhances the effect of keeping the riser and the water within warm.

According to another embodiment, the pump is an intake pump. Preferably, the pump is positioned above the water storage container. In this embodiment, the intake pump is used for drawing the water from the water storage container into the riser and against gravity towards the tap.

In an embodiment, the riser comprises a water inlet, wherein the water inlet is positioned above a bottom section of the water storage container. The water inlet is furthermore positioned below a nominal water level, wherein the nominal water level is the water level within the water storage container while the apparatus is operating nominally, e.g. without any disturbances. The riser may hang in the water storage container. For example, the pipeline is connected to a top section of the water storage container and continues as the riser within the water storage container and plunge into the water. The other end of the riser, in opposition to the connection to the top section of the water storage container, is a free end, which is positioned above a bottom section of the water storage container. In this embodiment, the pump draws water from the water storage container through the water inlet, i.e. the free end, of the riser.

Advantageously, the height, at which water is drawn from the water storage container and how far the riser reaches into the water storage container and the water within, can be adjusted by defining the length of the riser.

In another embodiment, a distance D between the riser and the heating element within the water storage container is larger than or equal to a safety distance Dₛ. The safety distance Dₛ may for example be larger than 5 mm, preferably larger than 10 mm and may not exceed 20 cm, preferably 15 cm.

The riser may be formed from a metal pipe, preferably a copper pipe or a stainless steel pipe. Metals have a high heat conductivity, which is why a metal pipe is preferably used as a riser to keep the water within warm. However, the heating element may become so hot that the riser takes damage if it is arranged too close. Advantageously, the safety distance Dₛ is maintained so that the riser is protected from excessive heat of the heating element.

In an embodiment, the heating element is configured to heat the water within the water storage container to a temperature between 90°C and 100°C, preferably between 95°C and 97°C. Temperatures of between 90°C and 100°C, and especially between 95°C and 97°C are commonly used for brewing tea or coffee. Temperatures above 100°C would lead to boiling water within the water storage container, which is not desired. Although the water storage container is an open water storage container, a lot of energy would be wasted due to the boiling of the water.

The present invention will be described in detail with reference to the examples shown in the drawings, in which the following is shown:
- Figure 1:: an embodiment of the invention comprising a booster pump;
- Figure 2:: an embodiment of the invention comprising a drain valve;
- Figure 3:: an embodiment of the invention comprising an intake pump.

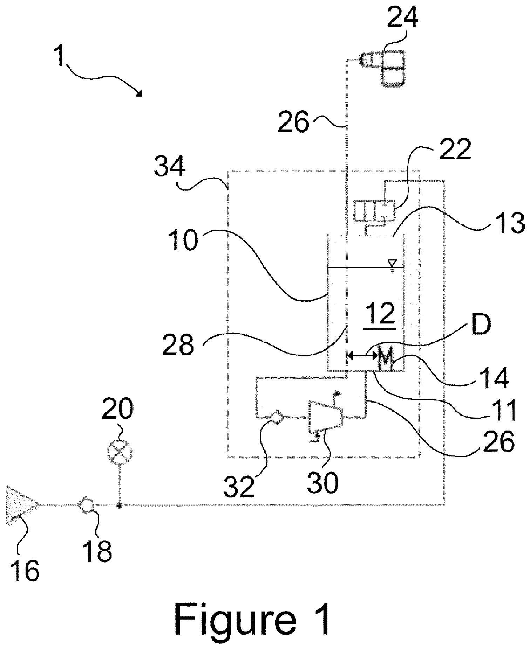

Figure 1 shows an apparatus 1 for providing hot water 12. The apparatus comprises a water storage container 10. When in operation, the water storage container 10 is filled with water 12. The water 12 is heated by a heating element 14. The heating element 14 may preferably be a heating resistance or a heating coil, which is electrically connected to an external power source (not shown).

The heating element 14 is configured to heat the water 12 within the water storage container 10. The water 12 may have a temperature between 90°C and 100°C, preferably between 95°C and 97°C. To prevent the unnecessary heating of the water 12 within the water storage container 10 by the heating element 14, the water storage container 10 may be thermally isolated with isolating material.

A water source 16 provides water 12 to be filled into the water storage container 10. Therefore, the water source 16 is fluidically connected to the water storage container 10 via a non-return valve 18, a manometric switch 20 and a valve 22. The valve 22 may take two positions. In a first position, the valve 22 is open and water 12 flows from the water source 16 into the water storage container 10. In a second position, the valve 22 is closed, which disrupts the flow of water 12. If the valve 22 is in the second position, no water 12 flows into the water storage container 10. The non-return valve 18 and the manometric switch 20 are optional components of the apparatus 1.

The apparatus 1 further comprises a tap 24 for tapping water 12. The tap 24 is positioned above the water storage container 10. Preferably, the tap 24 may be built onto a kitchenette, kitchen cabinet, kitchen unit or the like. The water storage container 10 and the other components can then be built into the kitchenette, kitchen cabinet, kitchen unit or the like respectively. If the apparatus 1 is installed in this way, it may be more appealing to a user, since the water storage container 10 and the other components are hidden within the kitchen furniture.

The tap 24 is fluidically connected to the water storage container 10 via a pipeline 26. The pipeline 26 is formed at least partly as a riser 28 within or through the water storage container 10. In other words, the pipeline 26 runs through the water storage container 10. In Figure 1, the pipeline 26 enters the water storage container 10 in a bottom section 11 of the water storage container 10 and exits the water storage container 10 at a top section of the water storage container 10. In Figure 1, the latter is formed as an opening 13. Between these two sections, the pipeline 26 is formed as the riser 28. The outside of the riser 28 is in contact with the heated water 12 within the water storage container 10. The inside of the riser 28 is in contact with the water 12, which will be provided to the tap 24 before the water 12 from the water storage container 10 reaches the tap 24. Thus, the heated water 12 within the water storage container 10 keeps the riser 28 and the water 12 within hot. A user tapping hot water 12 from tap 24 will first receive the water 12 from the riser 28 and then shortly afterwards the water 12 from the water storage container 10. Thus, the temperature of the received water is maximized.

The distance D is measured between the heating element 14 and the riser 28. It is larger than a safety distance Dₛ, which indicates the minimum distance at which the risk for the riser being exposed to too much heat is reduced.

The pipeline 26 comprises a pump 30 to pump the water 12 against gravity towards the tap 24. In the embodiment shown in Figure 1, the pump 30 is a booster pump, which increases the pressure applied to it at its inlet port. The pressure, which is applied to the inlet port of the pump 30, comes from the water column of the water 12 within the water storage container 10. The pressure is boosted to press the water 12 against gravity towards the tap 24.

In flow direction behind the pump 30, the pipeline further comprises a non-return valve 32 to prevent water 12 from flowing back towards the water storage container 10. This is especially important, if the tap 24 is additionally fluidically connected to a second water source (not shown) like a cold water source or the common water line. Latter is under pressure to provide flowing water in higher floors of a building. The water storage container 10 is an open water storage container 10. Water 12 flowing back to the water storage container 10 uncontrollably would lead to water 12 flooding the water storage container 10 and probably leaking out of the apparatus 1. Therefore, the non-return valve 32 behind the pump prevents flooding and leakage of the apparatus 1.

The apparatus 1 of Figure 1 further comprises a hull 34. The hull 34 protects the water storage container 10 and other components of the apparatus 1 from taking damage due to accidental shocks and shaking. The hull 34 further protects the water storage container 10 from dust and other items being stored within a surrounding kitchen unit or the like. To fluidically connect the water storage container 10 to the atmosphere, the hull 34 must not be closed. The hull 34 needs at least a hole or an opening somewhere to let air into and out of the hull 34.

Furthermore, the hull 34 protects the user from accidentally touching the heated water storage container 10 from receiving an electric shock from the electronic components of the apparatus 1. Thus, the hull protects the user from injuries.

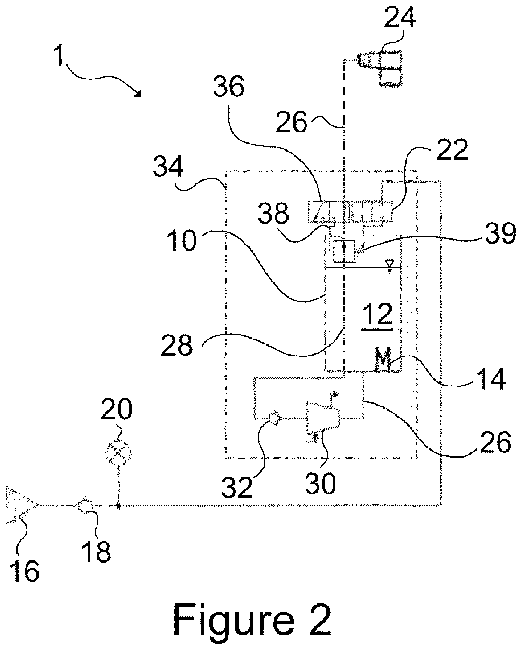

Figure 2 shows a modification of the apparatus 1 from Figure 1. In comparison to the apparatus 1 of Figure 1, the pipeline 26 of the apparatus 1 of Figure 2 comprises additionally a drain valve 36. The drain valve 36 has three ports and may take two different positions, a tapping position and a draining position. Thus, the drain valve 36 is a three-two-way valve. In alternate embodiments, the drain valve may comprise more ports, more positions or both.

Figure 2 shows the drain valve 36 in the tapping position. Two of the three ports are connected to the pipeline 26. Water 12, which is pumped by the pump 30 from the water storage container 10 towards the tap 24 flows through the drain valve 36, if the drain valve 36 is in the tapping position. The third port of the drain valve 36 is fluidically connected to a return line 38.

The return line 38 is fluidically connected to the water storage container 10. If the drain valve 36 is in the draining position, the water storage container 10 and the tap 24 are connected to each other fluidically via the drain valve 36 and the return line 38. Then, the tap 24 fulfills the function of an air inlet enabling the water 12 within the pipeline 26 between the drain valve 36 and the tap 24 can flow back into the water storage container 10 via the return line 38.

The pipeline 26 may further comprise a pressure relief valve 39 to prevent the riser 28, the non-return valve 32 or the drain valve 36 from taking damage due to overpressure within the riser. If the pressure within the riser is too high, the pressure relief valve 39 may release water or water steam into the water storage container or into the atmosphere. In alternate embodiments (not shown) the pressure relief valve 39 may be positioned anywhere between the non-return valve 32 and the drain valve 36. In Figure 2, the pressure relief valve 39 is positioned above the water level. In alternate embodiments, the pressure relief valve 39 may be positioned below the water level.

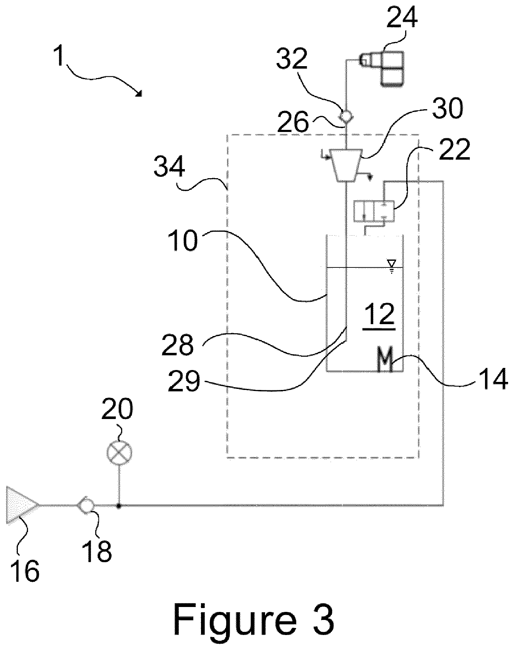

Figure 3 shows another embodiment of the apparatus 1 according to the invention. In this embodiment, the pipeline 26 comprises a pump 30, which is an intake pump and positioned above the water storage container 10. The inlet pump draws the water 12 from the water storage container 10 against gravity through water inlet 29 and the riser 28 towards the tap 24. To prevent water 12 from a second water source (not shown), which may be fluidically connected to the tap 24 as well, from flooding the water storage container 10, the pipeline 26 further comprises a non-return valve 32 between the pump 30 and the tap 24.

In a further embodiment of the apparatus 1 shown in Figure 3, the pipeline 26 may comprises a drain valve 36 like the one shown in Figure 2 between the non-return valve 32 and the tap 24.

### List of references

- 1: apparatus

- 10: water storage container
- 11: bottom section
- 12: water
- 13: opening
- 14: heating element
- 16: water source
- 18: non-return valve

- 20: manometric switch
- 22: valve
- 24: tap
- 26: pipeline
- 28: riser
- 29: water inlet

- 30: pump
- 32: non-return valve
- 34: hull
- 36: drain valve
- 38: return line
- 39: pressure relief valve

- D: distance

## Claims

1. Apparatus (1) for providing hot water (12), wherein the apparatus (1) comprises:
• a water storage container (10);
• a heating element (14) for heating water (12) positioned within the water storage container (10); and
• a tap (24), wherein the tap (24) is positioned above the water storage container (10), wherein the tap (24) is fluidically connected to the water storage container (10) via a pipeline (26), wherein the pipeline (26) comprises a pump (30),
**characterized in that** the pipeline (26) is at least partly formed as a riser (28) within or through the water storage container (10).

2. Apparatus (1) according to claim 1, wherein the water storage container (10) is an open water storage container (10).

3. Apparatus (1) according to claim 1 or claim 2, wherein the pipeline (26) comprises a drain valve (36) for draining the water (12) from the pipeline (26) or parts thereof, wherein the drain valve (36) comprises a tapping position and a draining position, wherein the water storage container (10) and the tap (24) are fluidically connected to each other via the riser (28) if the drain valve (36) is in the tapping position.

4. Apparatus (1) according to claim 3, wherein the drain valve (36) is a three-two-way valve.

5. Apparatus (1) according to claim 3 or claim 4, wherein the tap (24) and the water storage container (10) are connected fluidically to each other via the pipeline (28), if the drain valve (36) is in the draining position.

6. Apparatus (1) according to one of the preceding claims, wherein the tap (24) is additionally fluidically connected to a second water source and the pipeline (26) comprises a non-return valve (32).

7. Apparatus (1) according to one of the preceding claims, wherein the pipeline (26) comprises a pressure relief valve (39) between the drain valve (36) and the non-return valve (32).

8. Apparatus (1) according to one of the preceding claims, wherein the pump (30) is a booster pump.

9. Apparatus (1) according to claim 8, wherein the pump (30) is positioned beneath the water storage container (10).

10. Apparatus (1) according to claim 8 or claim 9, wherein the pipeline (26) is fluidically connected to a bottom section (11) of the water storage container (10).

11. Apparatus (1) according to one of the claims 1 to 7, wherein the pump (30) is an intake pump

12. Apparatus (1) according to claim 11, wherein the pump (30) is positioned above the water storage container (10).

13. Apparatus (1) according to claim 11 or claim 12, wherein the riser (28) comprises a water inlet (29), wherein the water inlet 29 is positioned above a bottom section (11) of the water storage container (10) and below a nominal water level.

14. Apparatus (1) according to any of the preceding claims, wherein a distance D between the riser (28) and the heating element (14) within the water storage container (10) is larger than or equal to a safety distance Ds.

15. Apparatus (1) according to any of the preceding claims, wherein the heating element (14) is configured to heat the water (12) within the water storage container (10) to a temperature between 90°C and 100°C.
